# EUROPÄISCHE PATENTSCHRIFT

(11) **EP 2 419 661 B1**
(45) Veröffentlichungstag und Bekanntmachung des Hinweises auf die Patenterteilung: **13.06.2018**
(21) Anmeldenummer: 10713838.0
(22) Anmeldetag: 08.04.2010
(51) Int. Cl.: F16H 57/02, F16H 57/025, F16M 1/00

(54) **Tragstruktur und Motorkonsole aus Grobblechen**
Support structure and engine console made from thick plates
Structure porteuse et console d'un moteur de tôles fortes

(30) Priorität: 14.04.2009 DE 102009017017
(43) Veröffentlichungstag der Anmeldung: 22.02.2012
(73) Patentinhaber: SEW-EURODRIVE GmbH & Co. KG, 76646 Bruchsal (DE)
(72) Erfinder: LAUER, Christian, 67378 Zeiskam (DE)
(86) Internationale Anmeldenummer: PCT/EP2010/002194
(87) Internationale Veröffentlichungsnummer: WO 2010/118837

(56) Entgegenhaltungen:
- EP-A2- 0 065 413
- DE-A1- 10 250 994
- DE-A1- 19 861 100
- GB-A- 403 636
- JP-A- 4 210 898

## Beschreibung

Die Erfindung betrifft eine **Tragstruktur aus Grobblechen für ein** Getriebe, und eine Motorkonsole aus Grobblech. Anordnungen von Grobblechen sind allgemein bekannt. Bisher wurden die Grobbleche über U-V Schweißnähte oder Kehlnähten miteinander verbunden.
**Aus der** DE 102 50 994 A1 **ist ein Spindelantrieb für Verstelleinrichtungen in Kraftfahrzeugen bekannt.**
**Aus der** GB 403 636 A **sind Verbesserungen bekannt, die bezogen sind auf die Rahmenstruktur einer Verbrennungsmaschine.**
**Aus der** DE 198 61 100 A1 **ist ein Schneckenantrieb für Verstelleinrichtungen in Kraftfahrzeugen bekannt.**

**Aus der** JP H4 210898 A **ist eine stabile Maschinenkonsole bekannt.**
**Aus der** EP 0 065 413 A2 **ist ein verbesserter Skid für rotierende Maschinen bekannt.**
Der Erfindung liegt daher die Aufgabe zugrunde, eine Anordnung von Grobblechen weiterzubilden.
Erfindungsgemäß wird die Aufgabe bei der Tragstruktur nach den in Anspruch 1 und bei der Motorkonsole nach den in Anspruch 2 angegebenen Merkmalen gelöst.

Wichtige Merkmale der Erfindung bei der Anordnung mit Grobblechen als Tragstruktur sind, dass ein Grobblech eine durchgehende Ausnehmung aufweist und ein weiteres Grobblech einen in die durchgehende Ausnehmung greifenden Zapfen aufweist. Von Vorteil ist dabei, dass eine formschlüssige Verbindung Kräfte aufnimmt. Gemäß der Erfindung greift der Zapfen teilweise in die durchgehende Ausnehmung ein. Von Vorteil dabei ist, dass der Zapfen nicht vorsteht und eine plane Ebene des Grobbleches unterbrechen würde. Gemäß der Erfindung ist die durchgehende Ausnehmung tiefer, als der Zapfen lang. Von Vorteil ist dabei, dass der Zapfen nicht vorsteht. Gemäß der Erfindung ist ein freistehendes Ende des Zapfens in der durchgehenden Ausnehmung mit dem Grobblech verschweißt, insbesondere indem eine Schweißnaht entlang einer von außen sichtbaren Kante des freistehenden Endes gebildet ist. Von Vorteil ist dabei, dass die Schweißnaht in der Ausnehmung liegt und nicht nachbearbeitet werden muss. Die Schweißnaht kann geringer ausgeführt sein, da auch die formschlüssige Verbindung Kräfte aufnimmt.

Bei einer weiteren vorteilhaften Ausgestaltung steht das weitere Grobblech mit einer den Zapfen aufweisenden Seite am Grobblech an. Von Vorteil ist dabei, dass die Lage der Grobbleche zueinander wohldefiniert ist.
Bei einer weiteren vorteilhaften Ausgestaltung ist das Grobblech mit dem weiteren Grobblech um den Zapfen herum verschweißt. Von Vorteil ist dabei, dass eine symmetrische Anordnung der Scheißnähte möglich ist und dadurch eine verziehen der Grobbleche durch den Wärmeeintrag vermindert ist. Gemäß der Erfindung ist der Zapfen als quaderförmige Ausstülpung in einer Seite des weiteren Grobleches ausgebildet. Von Vorteil ist dabei, dass die Ausstülpung an die Form und Dicke der Grobbleche angepasst ist. Gemäß der Erfindung sind der Zapfen und die durchgehende Ausnehmung mittels thermischen Schneiden gefertigt, insbesondere mittels Laserschneiden oder autogenem Brennschneiden. Von Vorteil ist dabei, dass bei hoher Schnittgüte verschieden Formen schnell und einfach realisierbar sind.
Bei einer Befestigungskonstruktion aus Grobblechen für ein Getriebe oder einen Motor, sind ein Grobblech und ein weiteres Grobblech nach einem der oben beschriebenen Anordnung verbunden. Von Vorteil ist dabei, dass ein Getriebe oder ein Motor sicher und kostengünstig befestigbar ist.
Bei einer Tragstruktur sind die Grobbleche als ein annähernd ringförmiges Teilblech, ein viereckiger Rahmen und zwei Winkel ausgeführt, wobei das annähernd ringförmige Teilblech und der viereckige Rahmen senkrecht zueinander angeordnet sind und über die Winkel mit einander verbunden sind, wobei an seitlichen Ausstülpungen des ringförmigen Teilbleches und in dem viereckigen Rahmen im Wesentlichen viereckige Durchgehende Ausnehmungen ausgeführt sind, in welche korrespondierende Zapfen der Winkel teilweise eingreifen. Von Vorteil ist dabei, dass die Tragstruktur sicher und einfach zu fertigen ist und eine stabile und tragfähige Konstruktion bildet. Gemäß der Erfindung ist der Rahmen mit dem ringförmigen Teilblech um die jeweiligen Zapfen herum verschweißt. Von Vorteil ist dabei, dass eine Schweißnaht sicher und einfach fertigbar ist und mit geringerer Tiefe ausgeführt werden kann.
Bei einer weiteren vorteilhaften Ausgestaltung sind ein Grobblech und ein weiteres Grobblech mit einer der oben beschriebenen Anordnungen verbunden. Von Vorteil ist dabei, dass die Anordnung sicher und eindeutig fügbar ist.
Bei einer Motorkonsole aus Grobblechen, sind die Grobbleche als ein Fußblech, ein Flanschblech und zwei Seitenbleche ausgebildet, wobei eine Normale des Flanschbleches parallel zu einer Motorachse eines auf der Motorkonsole anordenbaren Motors steht und die Seitenbleche parallel zur Motorachse beidseits des anordenbaren Motors angeordnet sind, wobei die Seitenbleche Zapfen aufweisen, welche in entsprechend geformte durchgehenden Ausnehmungen im Fußblech und dem Flanschblech teilweise eingreifen. Von Vorteil ist dabei, dass die Motorkonsole einfach und stabil zu fertigen ist. Gemäß der Erfindung sind die Seitenbleche mit dem Fußblech und dem Flanschblech im Bereich der Zapfen und den durchgehenden Ausnehmungen verschweißt. Von Vorteil ist dabei, dass eine sichere, haltbare Verbindung geschaffen ist. Gemäß der Erfindung ist eine Motorbefestigung mit einem Beinblech und einem Bodenblech als Grobbleche an der Motorkonsole befestigt, indem Zapfen des Beinblechs in entsprechende weitere durchgehende Ausnehmungen des Fußblechs eingreifen und sind mit diesen in den Ausnehmungen und um die Ausnehmungen herum verschweißt. Von Vorteil ist dabei, dass ein Motor sicher und wohldefiniert in der Motorkonsole platzierbar ist. Gemäß der Erfindung sind die durchgehenden Ausnehmungen im Fußblech und dem Flanschblech als seitliche Einschnitte ausgeführt. Von Vorteil ist dabei, dass die Grobbleche einfach platzierbar und verbindbar sind.
Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Ausführungsbeispielen mit Bezugnahme auf die Zeichnung näher erläutert. Es zeigen rein schematisch:
- Fig. 1: eine dreidimensionale Ansicht einer erfindungsgemäßen Anordnung als Tragkonstruktion für ein Getriebe;
- Fig. 2: eine weitere dreidimensionale Ansicht der in Figur 1 gezeigten Ausführungsform;
- Fig. 3: einen Schnitt durch die in Figur 1 gezeigte Ausführungsform;
- Fig. 4: eine dreidimensionale Ansicht einer erfindungsgemäßen Motorkonsole, welche als Anordnung mit Grobblechen ausgeführt ist;
- Fig. 5: eine weitere dreidimensionale Ansicht der in Figur 4 gezeigten weiteren Ausführungsform; und
- Fig. 6: eine dreidimensionale Unteransicht der in Figur 4 gezeigten Ausführungsform.

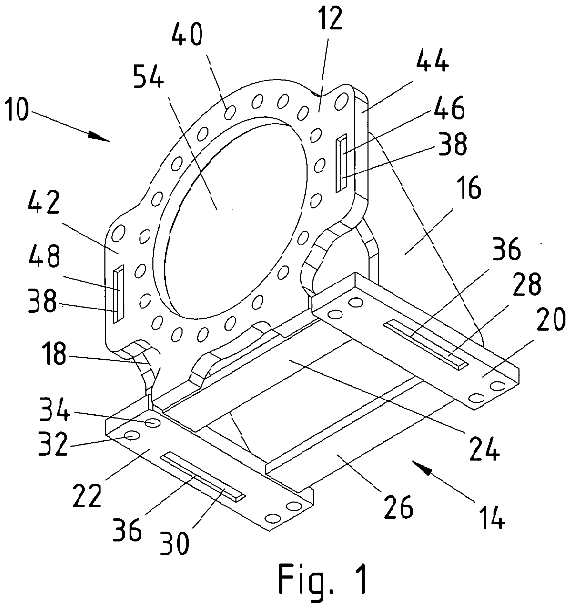

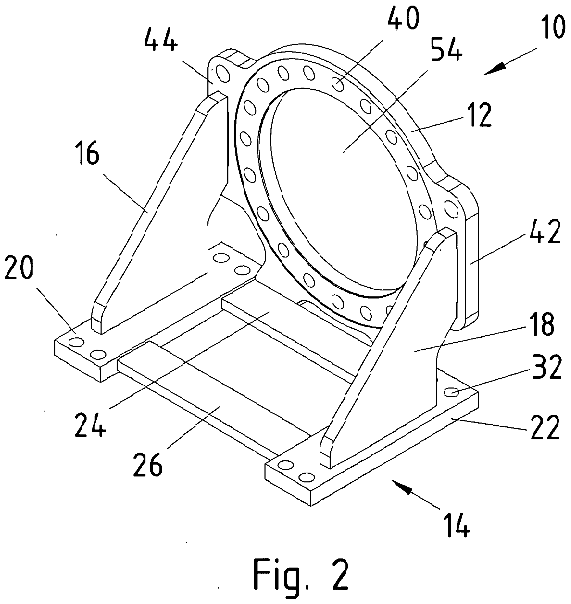

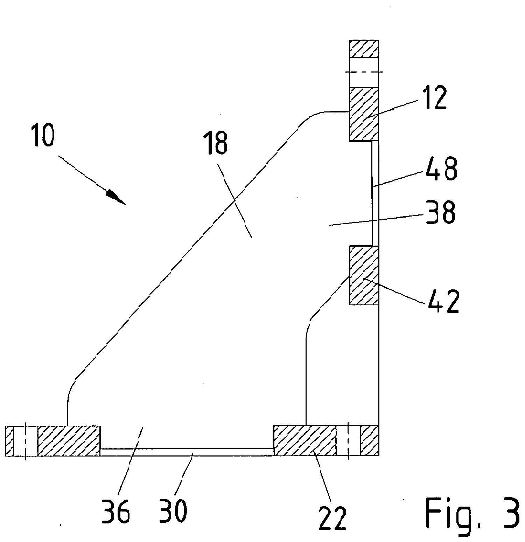

Die Figuren 1 bis 3 zeigen eine Tragstruktur 10 für ein Getriebe, welches als erfindungsgemäße Anordnung von Grobblechen ausgeführt ist. Grobbleche weisen eine Dicke von größer als drei Millimeter auf, so dass keine Stanzbiegeteile aus Grobblechen sinnvoll herstellbar sind.

Die Tragstruktur 10 ist aus Grobblechen aufgebaut, welche als ein annähernd ringförmiges Teilblech 12, ein viereckiger Rahmen 14 und zwei Winkel 16, 18 ausgeführt sind.

Der viereckige Rahmen 14 ist aus zwei Standblechen 20, 22 welche über eine vordere Querstrebe 24 und eine hintere Querstrebe 26 miteinander verbunden sind, aufgebaut. Die Standbleche 20, 22 und die vordere und hintere Querstreben 24, 26 weisen als Grobbleche eine quaderförmige Grundform auf, wobei die Querstreben schmaler und dünner als die Standbleche ausgeführt sind. Die vordere und hintere Querstrebe 24, 26 stoßen mit Ihren Stirnflächen an die Standbleche 20, 22 an. Vorteilhafterweise ragen Ausstülpungen an den Stirnflächen in passende Ausnehmungen in den Standblechen 20, 22 hinein. Die vordere und hintere Querstrebe 24, 26 sind mit den Standblechen 20, 22 verschweißt.

Die Standbleche 20, 22 weisen jeweils eine durchgehende Ausnehmung 28, 30 auf, welche ungefähr mittig in einer größten Grundfläche der Standbleche 20, 22 angeordnet sind und eine viereckige insbesondere rechteckige Form aufweisen. Weiter sind in den Endabschnitten der Standbleche 20, 22 jeweils zwei kreisförmige Löcher 32, 34 ausgeführt. Durch diese kreisförmigen Löcher 32, 34 lassen sich zum Beispiel Schrauben führen, mit welchen die Tragstruktur 10 an einer Vorrichtung befestigt werden kann.

Das annähernd ringförmige Teilblech 12 weist eine kreisförmige Öffnung 54 auf, welche von einem Bohrbild 40 umgeben ist. In zwei sich gegenüberliegende Ausstülpungen 42, 44 des annähernd ringförmigen Teilblechs 12 sind jeweils eine weitere durchgehende Ausnehmung 46, 48 eingebracht.

Zwei weitere Ausstülpungen 50, 52 des annähernd ringförmigen Teilblechs 12 liegen jeweils an der vorderen Querstrebe 24 und an einer der beiden Standbleche 20, 22 an. Somit ist ein auf das annähernd ringförmig Teilblech 12 übertragenes Drehmoment besser an den Standblechen 20, 22 abgestützt.

Die Winkel 16, 18 weisen eine annähernd trapezförmige Form auf, wobei eine Seite nach Innen gezogen ist, und eine der Seite gegenüberliegende Seite leicht nach außen gezogen ist. Die Winkel 16,18 liegen mit jeweils einer Kante an einem der beiden Standbleche 20, 22 auf und mit einer weiteren Kante stehen die Winkel an dem annähernd ringförmigen Teilblech 12, insbesondere an dessen sich gegenüberliegenden Ausstülpungen 42, 44 an.

Die Kanten und die weiteren Kanten der Winkel 16, 18 weisen jeweils eine quaderförmige Ausstülpung als Zapfen 36 und weiteren Zapfen 38 auf. Die Zapfen 36 und die weitern Zapfen 38 weisen somit ein freistehendes Ende und ein mit dem jeweiligen Winkel 16, 18 fest verbundenes Ende auf.

Die Zapfen 36 ragen im Rahmen der Herstellungsgenauigkeit passgenau in die durchgehende Ausnehmung 28, 30 hinein. Die weiteren Zapfen 38 ragen im Rahmen der Herstellungsgenauigkeit passgenau in die weiteren durchgehenden Ausnehmungen 46, 48 hinein. Somit ist jeweils eine Formschlüssige Verbindung in zwei Dimensionen zwischen den Winkeln 16, 18 und dem viereckigem Rahmen 14 sowie dem annähernd ringförmigen Teilblech 12 gebildet.

Die Zapfen 36 bzw. die weiteren Zapfen 38 sind weniger lang als die durchgehenden Ausnehmungen 28, 30 und die weiteren durchgehenden Ausnehmungen 46, 48 tief, oder anders ausgedrückt ist eine Blechdicke im Bereich der durchgehenden Ausnehmungen 28, 30 und der weiteren durchgehenden Ausnehmungen 46, 48 größer als die entsprechenden Zapfen 36 oder weiteren Zapfen 38 lang sind. Dies bedeutet, dass die Zapfen 36 und die weiteren Zapfen 38 die durchgehenden Ausnehmungen 28, 30 und die weiteren durchgehenden Ausnehmungen 46, 48 nicht vollständig ausfüllen.

Entlang der Kante der freistehenden Enden der Zapfen 36 und der weiteren Zapfen 38 werden die Winkel 16, 18 mit dem annähernd ringförmigen Teilblech 12 und den Standblechen 20, 22 in der jeweiligen durchgehenden Ausnehmung 28, 30 bzw. der weiteren durchgehenden Ausnehmung 46, 48 verschweißt. Eine entstandene Schweißnaht liegt somit versteckt in der durchgehenden Ausnehmung 28, 30 bzw. der weiteren durchgehenden Ausnehmung 46, 48 und muss nicht mehr nachbearbeitet werden.

Um die feststehenden Enden der Zapfen 36 bzw. weiteren Zapfen 38 herum, sind die Winkel 16, 18 ebenso mit den Standblechen 20, 22 und dem annähernd ringförmigen Teilblech 12 verschweißt. Durch die formschlüssige Verbindung werden die Schweißnähte nicht auf Scherung beansprucht. Durch die symmetrische beidseitige Ausführung der Schweißnähte werden entstehende Schweißeigenspannungen besser verteilt. Terrassenbrüche werden wirksam vermieden. Die Schweißnaht kann weniger stark sein, was den Wärmeeintrag in die Grobbleche verkleinert. Dies ist günstig für Grobbleche mit einem hohen Kohlenstoffgehalt, um eine Versprödung zu vermeiden.

Des Weiteren müssen keine U-V- Schweißnähte ausgeführt werden, und auf ein Anschrägen der Kanten der Grobleche kann verzichtet werden. Die Grobbleche sind vor dem Schweißen einfach fixierbar und es besteht so gut wie keine Verwechslungsgefahr der verwendeten Grobbleche, wenn die Zapfen und zugehörigen Ausnehmungen zueinander korrespondierend ausgeführt sind.

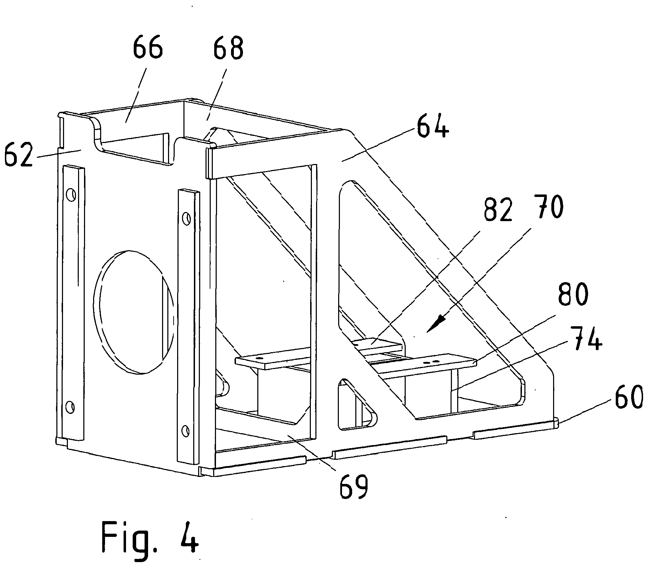

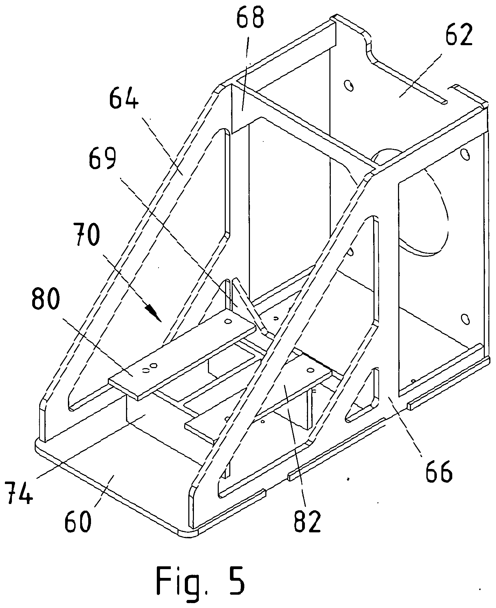

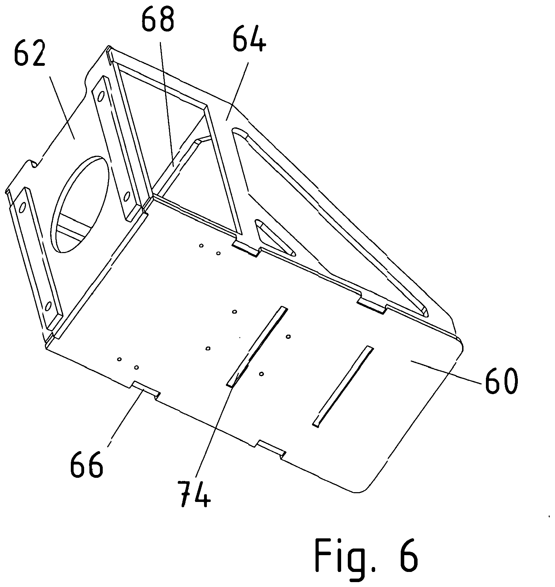

Die Figuren 4 bis 6 zeigen eine weitere erfindungsgemäße Ausführungsform als Motorkonsole aus Grobblechen. Die Grobbleche für die Motorkonsole sind als Fußblech 60, Flanschblech 62 und zwei Seitenbleche 64, 66 ausgeführt. Sie sind als eine Art Gehäuse für einen Motor angeordnet. Das Flanschblech 62 weist eine kreisförmige mittig angeordnete Durchgangsöffnung auf, durch welche eine vom Motor angetriebene Welle führbar ist. Das Fußblech 60 stößt mit einem Kantenbereich an einen Kantenbereich des Flanschbleches 62 an. Das Fußblech 60 steht senkrecht zum Flanschblech 62.

Die Seitenbleche 64, 66 stehen an zwei sich gegenüberliegenden weiteren Kanten des Fußbleches 60 an und stützen das Flanschblech 62 ab. Seitliche Ausstülpungen der Seitenbleche 64, 66 ragen in entsprechend ausgeformte seitliche Einschnitte des Fußbleches 60 und des Flanschbleches 62 hinein.

Die Seitenbleche 64, 66 weisen einen dreieckförmigen Abschnitt und einen sich an einer Seite des dreieckförmigen Abschnitts anschließenden rechteckförmigen Abschnitt auf. Der rechteckförmige Abschnitt ist zum Flanschblech 62 hin angeordnet. An einer Verbindungslinie des dreieckförmigen Abschnitts und des rechteckförmigen Abschnitts sind die Seitenbleche über eine erste Querverstrebung 68 und eine zweite Querverstrebung 69 miteinander verbunden. Die zweite Querverstrebung 69 liegt mit einer Kante auf dem Fußblech 60 auf.

Eine Motorbefestigung 70 aus Grobblechen besteht aus einem H-förmigen Beinblech 74 und zwei Bodenblechen 80 82, welche ebenso aus Grobblechen oder Grobblechen entsprechenden Profilen gefertigt sind.

Die Motorbefestigung 70 ist auf dem Fußblech 60, zwischen den zwei Seitenblechen 64, 66 angeordnet. Eine H-förmige Stirnfläche des Beinblechs 74 liegt auf dem Fußblech 60 auf. Zwei quaderförmige Ausstülpungen des Beinblechs 74 ragen in entsprechend ausgeformte durchgehende Ausnehmungen des Fußblechs 60 teilweise hinein.

Die Ausstülpungen sind mit den entsprechenden Ausnehmungen bzw. seitlichen Einschnitten wie oben beschrieben verschweißt, d.h. in der Ausnehmung. Dadurch lässt sich einfach schnell und stabil eine Motorkonsole herstellen.

### Bezugszeichenliste

- 10: Tragstruktur
- 12: annähernd ringförmiges Teilblech
- 14: viereckiger Rahmen
- 16, 18: Winkel
- 20, 22: Standblech
- 24, 26: Querstrebenblech
- 28, 30: durchgehende Ausnehmung
- 32, 34: kreisförmige Löcher
- 36: Zapfen
- 38: weiterer Zapfen
- 40: Bohrbild
- 42, 44: sich gegenüberliegende Ausstülpungen
- 46, 48: eine weitere durchgehende Ausnehmung
- 50, 52: weitere Ausstülpungen
- 54: kreisförmige Öffnung
- 60: Fußblech
- 62: Flanschblech
- 64, 66: Seitenblech
- 68: erste Querverstrebung
- 69: zweite Querverstrebung
- 70: Motorbefestigung
- 74: Beinblech
- 80, 82: Bodenblech

## Patentansprüche

1. Tragstruktur (10) aus Grobblechen für ein Getriebe,
**dadurch gekennzeichnet, dass**
die Grobbleche als ein annähernd ringförmiger Teilblech (12), ein viereckiger Rahmen (14) und zwei Winkel (16, 18)ausgeführt sind, wobei des annähernd ringförmige Teilblech (12) und der viereckige Rahmen (14) senkrecht zueinander angeordnet sind und über die Winkel (16, 18)mit einander verbunden sind,
wobei an seitlichen Ausstülpungen (42, 44) des ringförmigen Teilblechs (12) und in dem viereckigen Rahmen (14) im Wesentlichen viereckige durchgehende Ausnehmungen (28, 30) ausgeführt sind in welche korrespondierende Zapfen (36) der Winkel (16, 18)teilweise eingreifen, wobei die durchgehenden Ausnehmungen (28, 30) tiefer sind, als die Zapfen lang sind, wobei die Zapfen (36) als quaderförmige Ausstülpungen in Seiten der Winkel ausgebildet sind, wobei die freistehenden Enden der Zapfen (36) in den durchgehenden Ausnehmungen (28, 30) mit dem Grobblech verschweißt sind, indem eine Schweißnaht entlang einer von außen sichtbaren Kante des freistehenden Endes gebildet ist,
wobei der Rahmen (14) mit dem ringförmigen Teilblech (12) um die jeweiligen Zapfen (36) herum verschweißt ist.

2. Motorkonsole aus Grobblechen,
wobei die Grobbleche als Tragstruktur (10) fungieren,
wobei ein Grobblech eine durchgehende Ausnehmung (28, 30) aufweist und ein weiteres Grobblech einen in die durchgehende Ausnehmung (28, 30) greifenden Zapfen (36) aufweist,
wobei der Zapfen (36) teilweise in die durchgehende Ausnehmung (28, 30) eingreift.
wobei ein freistehendes Ende des Zapfens (36) in der durchgehenden Ausnehmung (28, 30) mit dem Grobblech verschweißt ist, indem eine Schweißnaht entlang einer von außen sichtbaren Kante des freistehenden Endes gebildet ist,
wobei das Grobblech mit dem weiteren Grobblech um den Zapfen (36) herum verschweißt ist,
wobei der Zapfen (36) und die durchgehende Ausnehmung (28. 30) mittels thermischem Schneiden gefertigt sind,
wobei die durchgehende Ausnehmung (28, 30) tiefer ist, als der Zapfen (36) lang ist,
wobei der Zapfen (36) als quaderförmige Ausstülpung in einer Seite des weiteren Grobleches ausgebildet ist,
wobei das thermische Schneiden Laserschneiden oder autogenes Brennschneiden ist,
wobei die Grobbleche als ein Fußblech (60), ein Flanschblech (62) und zwei Seitenbleche (64, 66) ausgebildet sind,
wobei eine Normale des Flanschblechs (62) parallel zu einer Motorachse eines auf der Motorkonsole anordenbaren Motors steht und die Seitenbleche (64, 66) parallel zur Motorachse beidseits des anordenbaren Motors angeordnet sind,
wobei die Seitenbleche (64, 66) Zapfen (36) aufweisen, welche in entsprechend geformte durchgehenden Ausnehmungen (28, 30) im Fußblech (60) und dem Flanschblech (62) teilweise eingreifen,
wobei eine Motorbefestigung mit einem Beinblech (74) und einem Bodenblech (80, 82) als Grobbleche an der Motorkonsole befestigt ist, indem Zapfen (36) des Beinblechs (74) in entsprechende weitere durchgehende Ausnehmungen (28, 30) des Fußblechs eingreifen und mit diesen verschweißt sind,
indem die Seitenbleche (64, 66) mit dem Fußblech (60) und dem Flanschblech (62) im Bereich der Zapfen (36) und den durchgehenden Ausnehmungen (28, 30) verschweißt sind,
wobei die durchgehenden Ausnehmungen (28, 30) im Fußblech (60) und dem Flanschblech (62) als seitliche Einschnitte ausgeführt sind.

## Claims

1. A supporting structure (10) made of thick plates for a gear mechanism,
**characterised in that**
the thick plates are embodied as an approximately annular partial plate (12), a rectangular frame (14) and two brackets (16, 18), the approximately annular partial plate (12) and the rectangular frame (14) being arranged perpendicular to each other and being connected to one another via the brackets (16, 18),
with substantially rectangular continuous cutouts (28, 30) being formed on lateral protuberances (42, 44) of the annular partial plate (12) and in the rectangular frame (14), in which cutouts corresponding pegs (36) of the brackets (16, 18) partially engage,
the continuous cutouts (28, 30) being deeper than the pegs are long,
the pegs (36) being formed as cuboid protuberances in sides of the brackets,
the free ends of the pegs (36) in the continuous cutouts (28, 30) being welded to the thick plate **in that** a weld seam is formed along an edge of the free end which is visible from outside,
the frame (14) being welded to the annular partial plate (12) around the respective peg (36).

2. An engine bracket made of thick plates,
wherein the thick plates act as a supporting structure (10),
wherein one thick plate has a continuous cutout (28, 30) and a further thick plate has a peg (36) which engages in the continuous cutout (28, 30),
wherein the peg (36) engages partially in the continuous cutout (28, 30),
wherein a free end of the peg (36) in the continuous cutout (28, 30) is welded to the thick plate in that a weld seam is formed along an edge of the free end which is visible from outside,
wherein the thick plate is welded to the further thick plate around the peg (36),
wherein the peg (36) and the continuous cutout (28, 30) are manufactured by means of thermal cutting,
wherein the continuous cutout (28, 30) is deeper than the peg (36) is long,
wherein the peg (36) is formed as a cuboid protuberance in one side of the further thick plate,
wherein the thermal cutting is laser cutting or oxy-fuel cutting,
wherein the thick plates are formed as a foot plate (60), a flange plate (62) and two side plates (64, 66),
wherein a normal of the flange plate (62) is parallel to an engine axis of an engine which can be arranged on the engine bracket, and the side plates (64, 66) are arranged parallel to the engine axis on both sides of the arrangeable engine,
wherein
the side plates (64, 66) have pegs (36) which partially engage in correspondingly shaped continuous cutouts (28, 30) in the foot plate (60) and the flange plate (62),
wherein an engine fastening with a leg plate (74) and a base plate (80, 82) is fastened as thick plates on the engine bracket, in that pegs (36) of the leg plate (74) engage in corresponding further continuous cutouts (28, 30) of the foot plate and are welded thereto,
in that the side plates (64, 66) are welded to the foot plate (60) and the flange plate (62) in the region of the pegs (36) and the continuous cutouts (28, 30),
wherein the continuous cutouts (28, 30) in the foot plate (60) and the flange plate (62) are embodied as lateral incisions.

## Revendications

1. Structure porteuse (10) en tôles fortes pour une transmission, **caractérisée en ce que** les tôles fortes sont réalisées sous la forme d'une tôle partielle (12) approximativement annulaire, d'un cadre rectangulaire (14) et de deux cornières (16, 18), sachant que la tôle partielle (12) approximativement annulaire et le cadre rectangulaire (14) sont disposés perpendiculairement entre eux et sont reliés entre eux par l'intermédiaire des cornières (16, 18),
sachant que des évidements traversants (28, 30) essentiellement rectangulaires sont ménagés sur des protubérances latérales (42, 44) de la tôle partielle annulaire (12) et dans le cadre rectangulaire (14), évidements dans lesquels s'engagent partiellement des tenons correspondants (36) des cornières (16, 18),
sachant que les évidements traversants (28, 30) sont d'une profondeur supérieure à la longueur des tenons,
sachant que les tenons (36) sont réalisés sous la forme de protubérances parallélépipédiques dans des côtés des cornières,
sachant que les extrémités libres des tenons (36) sont soudées à la tôle forte dans les évidements traversants (28, 30), par le fait qu'un cordon de soudure est formé le long d'un bord, visible de l'extérieur, de l'extrémité libre,
sachant que le cadre (14) est soudé à la tôle partielle annulaire (12) tout autour des tenons respectifs.

2. Console de moteur en tôles fortes,
sachant que les tôles fortes jouent le rôle de structure porteuse (10),
sachant qu'une tôle forte présente un évidement traversant (28, 30) et qu'une autre tôle forte présente un tenon (36) s'engageant dans l'évidement traversant (28, 30),
sachant que le tenon (36) s'engage partiellement dans l'évidement traversant (28, 30), sachant qu'une extrémité libre du tenon (36) est soudée à la tôle forte dans l'évidement traversant (28, 30), par le fait qu'un cordon de soudure est formé le long d'un bord, visible de l'extérieur, de l'extrémité libre,
sachant que la tôle forte est soudée à l'autre tôle forte tout autour du tenon (36),
sachant que le tenon (36) et l'évidement traversant (28, 30) sont fabriqués par découpage thermique,
sachant que la profondeur de l'évidement traversant (28, 30) est supérieure à la longueur du tenon (36),
sachant que le tenon (36) est réalisé sous la forme d'une protubérance parallélépipédique dans un côté de l'autre tôle forte,
sachant que le découpage thermique est un découpage au laser ou un oxycoupage, sachant que les tôles fortes sont réalisées sous la forme d'une tôle de base (60), d'une tôle de flasque (62) et de deux tôles latérales (64, 66),
sachant qu'une normale de la tôle de flasque (62) est parallèle à un axe de moteur d'un moteur pouvant être disposé sur la console de moteur et que les tôles latérales (64, 66) sont disposées parallèlement à l'axe du moteur de part et d'autre du moteur à disposer, sachant que les tôles latérales (64, 66) présentent des tenons (36) qui s'engagent partiellement dans des évidements traversants (28, 30) de forme correspondante dans la tôle de base (60) et la tôle de flasque (62),
sachant qu'une fixation de moteur avec une tôle de pied (74) et une tôle de fond (80, 82) comme tôles fortes est fixée sur la console de moteur, par le fait que des tenons (36) de la tôle de pied (74) s'engagent dans d'autres évidements traversants correspondants (28, 30) de la tôle de base et sont soudés à ceux-ci,
par le fait que les tôles latérales (64, 66) sont soudées à la tôle de base (60) et à la tôle de flasque (62) dans la région des tenons (36) et des évidements traversants (28, 30), sachant que les évidements traversants (28, 30) dans la tôle de base (60) et la tôle de flasque (62) sont réalisés sous la forme de découpures latérales.
